# EUROPÄISCHE PATENTANMELDUNG

(11) **EP 4 847 329 A1**
(43) Veröffentlichungstag der Anmeldung: **02.12.2026**
(21) Anmeldenummer: 26166761.2
(22) Anmeldetag: 23.03.2026
(51) Int. Cl.: B60T 7/04, B60T 7/10, B60T 7/12, B60T 13/38, B60T 13/57, B60T 13/66, B60T 13/68, B60T 13/74, B60T 15/04

(54) **FLUIDISCH BETÄTIGBARE BREMSEINRICHTUNG FÜR EINE LANDWIRTSCHAFTLICHE ARBEITSMASCHINE SOWIE LANDWIRTSCHAFTLICHE ARBEITSMASCHINE**

(30) Priorität: 26.05.2025 DE 102025120365
(71) Anmelder: CLAAS Industrietechnik GmbH, 33106 Paderborn (DE)
(72) Erfinder: Blömer, Marcel, 8485 Lengenfeld (DE); Steinhaus, Sebastian, 33102 Paderborn (DE)
(74) Vertreter: CLAAS Gruppe

(57) **Zusammenfassung**

Die vorliegende Erfindung betrifft eine fluidisch betätigbare Bremseinrichtung (9) für eine landwirtschaftliche Arbeitsmaschine (1). Die Bremseinrichtung (9) umfasst ein Bremselement (13), eine mit dem Bremselement (13) gekoppelte Bremsbetätigungsvorrichtung (14), eine fluidische Druckquelle (16) sowie eine Auslasseinheit (15). Weiterhin umfasst die Bremseinrichtung (9) eine Steuereinrichtung (17) und eine mittels der Steuereinrichtung (17) ansteuerbare Ventileinrichtung (18), welche der Druckquelle (16), der Auslasseinheit (15) und der Bremsbetätigungsvorrichtung (14) zwischengeschaltet und dazu vorgesehen und eingerichtet ist, bedarfsweise eine fluidische Verbindung zwischen der Druckquelle (16) und der Bremsbetätigungsvorrichtung (14) oder der Bremsbetätigungsvorrichtung (14) und der Auslasseinheit (15) zur Betätigung des Bremselements (13) herzustellen. Die Bremseinrichtung (9) ist dadurch gekennzeichnet, dass die Ventileinrichtung (18) ein ansteuerbares Bremsbetätigungsventil (19) sowie ein erstes ansteuerbares Schaltventil (20) und ein zweites ansteuerbares Schaltventil (21) umfasst, wobei die zwei Schaltventile (20, 21) dem Bremsbetätigungsventil (19) und der Bremsbetätigungsvorrichtung (14) zwischengeschaltet und redundant ausgeführt sind.

## Beschreibung

Die vorliegende Anmeldung betrifft eine fluidisch betätigbare bzw. betätigte Bremseinrichtung für eine landwirtschaftliche Arbeitsmaschine gemäß dem Oberbegriff des unabhängigen Patentanspruchs 1 sowie eine landwirtschaftliche Arbeitsmaschine mit einer solchen fluidisch betätigbaren bzw. betätigten Bremseinrichtung gemäß dem unabhängigen Patentanspruch 13.

Die Bremseinrichtung kann dabei als Park- bzw. Feststell- und/oder Notbremseinrichtung genutzt werden. Feststellbremsen, die über eine automatische Betätigung verfügen und dabei elektronisch angesteuert werden, kommen zunehmend zur Komfortverbesserung an Traktoren zum Einsatz. Dabei ist von großer Bedeutung, dass die Bremsbetätigung nicht nur der Aufmerksamkeit des Fahrers überlassen wird, sondern abhängig von Situationen und Betriebszuständen des Traktors generell aktiviert wird. Von einem sich selbstständig in Bewegung setzenden Traktor gehen erhebliche Unfallgefahren aus, insbesondere dann, wenn der Fahrer im Heck- oder Frontbereich des Traktors an diesen Anbaugeräte an- oder abkuppelt sowie an diesen Anbaugeräten oder an den Kuppeleinrichtungen des Traktors Einstellungen vornimmt. Eine elektronisch ansteuerbare Feststellbremse ist außerdem von großer Bedeutung, wenn moderne Traktoren im Rahmen einer Leistungsverzweigung des Getriebes mit einem als CVT-Getriebe (Continuously Variable Transmission) versehen sind, so dass sich der Traktor im aktiven Stillstand bei nicht angetriebener Getriebeeingangswelle, also abgestellter Hubkolbenbrennkraftmaschine, in Bewegung setzen kann. Das kann beispielsweise auch dann der Fall sein, wenn die Hubkolbenbrennkraftmaschine aufgrund eines Kraftstoffmangels zum Stillstand kommt. Elektronisch ansteuerbare Feststellbremsen müssen daher hohe Anforderungen hinsichtlich ihrer funktionalen Sicherheit erfüllen, damit das Fahrzeug zum einen, wie dargelegt, sicher abgestellt werden kann, aber zum anderen auch die Feststellbremse nicht unbeabsichtigt während der Fahrt aktiviert wird, was zu unkontrollierbaren Fahrzuständen führen kann. In der EU-Verordnung 2015/68 werden diese beiden wesentlichen Hauptanforderungen an elektronisch ansteuerbare Feststellbremsen im Hinblick auf die funktionale Sicherheit definiert. Ein einfacher Fehler in der elektrohydraulischen Betätigung, bei dem zum Beispiel ein Bruch im Kabel eines Fahrzeugkabelbaums auftritt, ist aufgrund des hohen Anteils an Straßenfahrten des Traktors, die dieser mit seiner hohen Gesamtmasse, zumeist mit Anhängern sowie einer hohen Geschwindigkeit durchführt, nicht akzeptabel. Von daher ist es von großer Bedeutung, dass die zumeist mit einem Federspeicherbremszylinder versehene Bremseinrichtung auch als Notbremseinrichtung verwendet werden kann, wenn die normale Betriebsbremse ausfällt oder deren Bremsmoment nicht ausreichend ist.

Eine hydraulisch betätigte mit einem Federspeicherbremszylinder als Bremszuspanneinrichtung versehene Feststell- und/oder Notbremseinrichtung, ist aus der DE 10 2008 030 511 A1 bekannt. Diese Bremsanlage weist eine Lamellenbremse auf, die über ein in einem Federspeicherbremszylinder angeordnetes Federelement eingerückt wird, um ein Bremsmoment zu erzeugen. Dieses Bremsmoment kann dadurch aufgehoben werden, dass in einem Druckraum des Federspeicherbremszylinders ein entgegen der Kraft des Federelements wirkender Druck aufgebaut wird. Dieser Druckaufbau in dem Druckraum wird ausgehend von einer als Druckspeicher ausgebildeten Druckquelle über eine erste als 3/2-Wegeventil ausgebildete Ventileinheit gesteuert. Diese als Bremsbetätigungventil dienende erste Ventileinheit wird in beiden Stellrichtungen über eine elektronische Steuereinheit elektromagnetisch betätigt, wobei die Steuereinheit unter anderem mit einem durch den Fahrer manuell verstellbaren Schaltelement verbunden ist. Bei einem Ausfall dieser Stelleinrichtung kann es jedoch zu sicherheitskritischem Ausfall der Bremseinrichtung kommen. Für solche Fälle ist eine Rastvorrichtung vorgesehen, wodurch die geschalteten Stellungen beispielsweise bei plötzlicher Leistungsunterbrechung gehalten werden können. Die Rastvorrichtung stellt somit sicher, dass die in der vorgenannten EU-Verordnung definierten Hauptanforderungen an eine elektronisch ansteuerbare Feststellbremse erzielt werden.

Nachteilig bei dieser aus dem Stand der Technik bekannten Bremseinrichtung ist allerdings, dass eine Ventileinrichtung mit Rastfunktion eine kostenintensive Sonderanfertigung und keine schnellverfügbare Standardventileinrichtung darstellt. Nur wenige Hersteller von Ventileinrichtungen können derartige Ventile überhaupt herstellen, dann meist nur für einzelne Produktreihen, nicht jedoch produktreihenübergreifend.

Ausgehend von dem vorstehend genannten Stand der Technik ist es demnach die Aufgabe der vorliegenden Erfindung eine fluidisch betätigbare bzw. betätigte Bremseinrichtung anzugeben, welche ohne komplexe und speziell angefertigte Ventileinrichtungen auskommt, sondern die in der EU-Verordnung 2015/68 definierten Hauptforderungen mittels einer Ventileinrichtung aus Standardkomponenten sicherstellen kann.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 12 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung eine fluidisch betätigbare bzw. betätigte Bremseinrichtung für eine landwirtschaftliche Arbeitsmaschine, insbesondere einen Traktor. Die Bremseinrichtung umfasst ein Bremselement, eine mit dem Bremselement gekoppelte Bremsbetätigungsvorrichtung, eine fluidische Druckquelle, eine als Tank ausgebildete Auslasseinheit, eine Steuereinrichtung und eine mittels der Steuereinrichtung ansteuerbare Ventileinrichtung. Die Ventileinrichtung ist der Druckquelle, der Auslasseinheit und der Bremsbetätigungsvorrichtung zwischengeschaltet und dazu vorgesehen und eingerichtet, bedarfsweise eine fluidische Verbindung zwischen der Druckquelle und dem Bremsbetätigungsvorrichtung oder dem Bremsbetätigungsvorrichtung und der Auslasseinheit zur Betätigung des Bremselements herzustellen. Die Bremseinrichtung ist dadurch gekennzeichnet, dass die Ventileinrichtung ein ansteuerbares Bremsbetätigungsventil sowie ein erstes ansteuerbares Schaltventil und ein zweites ansteuerbares Schaltventil umfasst, wobei die zwei Schaltventile dem Bremsbetätigungsventil und der Bremsbetätigungsvorrichtung zwischengeschaltet und redundant ausgeführt sind.

Durch die erfindungsgemäße Ausgestaltung der fluidisch betätigbaren Bremseinrichtung mit einem ansteuerbaren Bremsbetätigungsventil sowie zwei redundant ausgeführten Schaltventilen wird die funktionale Sicherheit der Bremseinrichtung sichergestellt. Selbst bei einem möglichen Ausfall eines Schaltventils kann das zweite Schaltventil weiterhin die Kontrolle über die Bremsbetätigung aufrechterhalten. Diese Redundanz erfüllt nicht nur die erforderlichen Sicherheitsanforderungen, sondern ermöglicht auch eine erhöhte Verfügbarkeit und Zuverlässigkeit der Bremseinrichtung, selbst unter herausfordernden Betriebsbedingungen. Darüber hinaus wird durch die Ausführung der Ventileinrichtung mit Standardkomponenten die Abhängigkeit von komplexen und kostenintensiven Sonderanfertigungen vermieden, was eine breitflächige und kostengünstige Anwendung in verschiedensten Maschinenproduktreihen ermöglicht, gleichzeitig auch die Wartung der Bremseinrichtung erleichtert. Die Schaltventile können sitzdichtend und somit ohne Leckage ausgeführt sein.

Gemäß einer vorteilhaften Weiterbildung der Erfindung ist vorgesehen, dass die Steuereinrichtung ein erstes Steuergerät und ein zweites Steuergerät umfasst, wobei ein Steuergerät der beiden Steuergeräte steuerungstechnisch ausschließlich mit einem Schaltventil der beiden Schaltventile verbunden und dazu vorgesehen und eingerichtet ist, ausschließlich das eine Schaltventil bedarfsweise anzusteuern, wobei das andere Steuergerät der beiden Steuergeräte steuerungstechnisch sowohl mit dem Bremsbetätigungsventil als auch mit dem anderen Schaltventil der beiden Schaltventile verbunden und dazu vorgesehen und eingerichtet ist, sowohl das Bremsbetätigungsventil als auch das andere Schaltventil bedarfsweise anzusteuern.

Durch die Aufteilung bzw. Zuordnung der Zuständigkeiten der Steuergeräte wird eine zusätzliche Sicherheitsebene geschaffen. Ein Steuergerät ist ausschließlich mit einem der Schaltventile verbunden, was bedeutet, dass selbst bei einem Ausfall eines Steuergeräts immer noch ein weiteres Steuergerät zur Verfügung steht und somit ein robuster Sicherungsmechanismus aktiv ist, der die Funktionalität des Bremssystems gewährleisten kann, sodass keine unerwartete Betätigung des Bremselements verursacht wird. Die steuerungstechnische Aufteilung minimiert das Risiko eines vollständigen Systemausfalls, gewährleistet die funktionale Sicherheit und steigert das Sicherheitsniveau über die in der EU-Verordnung 2015/68 definierten Anforderungen hinaus, wodurch beispielsweise eine Verwendung der Bremseinrichtung für autonome Arbeitsmaschinen möglich wird. Darüber hinaus verbessert diese Struktur die Diagnosefähigkeit bei Wartungs- und Fehlersuchen erheblich, da mögliche Fehlerquellen leichter lokalisiert und behoben werden können.

Gemäß einer vorteilhaften Weiterbildung der Erfindung ist vorgesehen, dass die Schaltventile als elektrisch betätigbare 2/2-Wegeventile ausgebildet sind, wobei in einer ersten Schaltstellung ein Fluss eines Mediums von dem Bremsbetätigungsventil hin zur Bremsbetätigungsvorrichtung freigeben und von der Bremsbetätigungsvorrichtung hin zum Bremsbetätigungsventil gesperrt ist, wobei insbesondere die erste Schaltstellung durch ein Rückschlagventil gebildet ist, wobei in einer zweiten Schaltstellung ein Fluss eines Mediums sowohl von dem Bremsbetätigungsventil hin zur Bremsbetätigungsvorrichtung als auch von der Bremsbetätigungsvorrichtung hin zum Bremsbetätigungsventil freigegeben ist.

Vorzugsweise ist vorgesehen, dass die Schaltventile dazu vorgesehen und eingerichtet sind, in einem ansteuerungsfreien Zustand die erste Schaltstellung und in einem angesteuerten Zustand die zweite Schaltstellung einzunehmen.

Gemäß einer vorteilhaften Weiterbildung der Erfindung ist vorgesehen, dass das Bremsbetätigungsventil als elektrisch betätigbares 3/2-Wegeventil ausgebildet ist, wobei in einer ersten Schaltstellung ein Fluss eines Mediums von der Druckquelle hin zu den Schaltventilen gesperrt und von den Schaltventilen hin zur Auslasseinheit freigegeben ist, wobei in einer zweiten Schaltstellung ein Fluss eines Mediums von der Druckquelle hin zu den Schaltventilen freigegeben und von den Schaltventilen hin zur Auslasseinheit gesperrt ist.

Vorzugsweise ist vorgesehen, dass das Bremsbetätigungsventil dazu vorgesehen und eingerichtet ist, in einem ansteuerungsfreien Zustand die erste Schaltstellung und in einem angesteuerten Zustand die zweite Schaltstellung einzunehmen.

Indem die Schaltventile und das Bremsbetätigungsventil jeweils zwei Schaltstellungen umfassen und dabei so ausgeführt sind, dass sie in einem ansteuerungsfreien Zustand automatisch die beschriebene erste Schaltstellung einnehmen, wird sichergestellt, dass im Regelbetrieb die Bremse kontrolliert eingelegt und gelöst werden kann, bei einem Ausfall eines oder beider Steuergeräte oder im Fall eines elektrischen Problems die Bremseinrichtung im sicheren Zustand verbleibt, ein ungewolltes sicherheitskritisches Einlegen oder Lösen der Bremse somit ausgeschlossen werden kann. Ein Ausfall der elektrischen Bauteile hat somit keinen Einfluss auf die Feststellbremse. Fällt beispielsweise das Bremsbetätigungsventil bzw. das für die Ansteuerung dieses Ventils zuständige Steuergerät im Betrieb, in dem die Bremse nicht eingelegt ist, aus, bleibt der Druck in der Bremsbetätigungsvorrichtung aufrechterhalten, da die Schaltventile die erste Schaltstellung einnehmen. Der Bremsdruck bleibt in diesem Fall konstant und die Bremse kann nicht automatisch eingelegt werden.

Gemäß einer vorteilhaften Weiterbildung der Erfindung ist vorgesehen, dass das Bremsbetätigungsventil als Proportionalventil ausgebildet ist.

Die Ausbildung des Bremsbetätigungsventils als Proportionalventil bietet erhebliche Vorteile hinsichtlich einer Steuerbarkeit des Bremseinrichtung im Kontext einer Nutzung als Notbremseinrichtung. Im Gegensatz zu herkömmlichen Ventilen, die in aller Regel nur binär zwischen ihren Schaltstellungen geschaltet werden können, ermöglicht ein Proportionalventil eine kontinuierliche, fein abgestufte Regelung des Mediumflusses. Dies führt dazu, dass im Falle eines Ausfalls des pedalbetätigten Bremssystems eine kontrollierte Abbremsung über die erfindungsgemäße Bremseinrichtung, die eigentlich die Funktion einer Feststellbremse übernimmt, aktuiert über einen Handbremshebel oder ein anderweitig ausgestaltetes Bestätigungselement, beispielsweise ein Drehrad, in der Kabine erfolgen kann, da der Druck und somit das Bremsmoment flexibel und schrittweise angepasst werden kann. Insbesondere kann durch die Ausgestaltung als Proportionalventil ein progressives Bremsverhalten in einem solchen Falle realisiert werden, sodass mit zunehmendem Ausmaß der Betätigung des Handbremshebels oder des anderweitig ausgestalteten Betätigungselements die Bremswirkung verstärkt zunimmt. Eine solche Steuerung ist besonders wichtig im landwirtschaftlichen Kontext, da Arbeitsmaschinen unter stark variierenden Lastbedingungen und Geschwindigkeiten arbeiten.

Gemäß einer vorteilhaften Weiterbildung der Erfindung ist vorgesehen, dass der Druckquelle und dem Bremsbetätigungsventil ein Rückschlagventil zwischengeschaltet ist, welches dazu vorgesehen und eingerichtet ist, einen Fluss eines Mediums von der Druckquelle hin zum Bremsbetätigungsventil freizugeben und von dem Bremsbetätigungsventil hin zur Druckquelle zu sperren.

Gemäß einer vorteilhaften Weiterbildung der Erfindung ist vorgesehen, dass der Druckquelle und dem Bremsbetätigungsventil ein Druckspeicher zwischengeschaltet ist.

Vorzugsweise ist vorgesehen, dass das Rückschlagventil derart angeordnet ist, dass es der Druckquelle und dem Druckspeicher zwischengeschaltet ist.

Das Zwischenschalten eines Rückschlagventils sowie eines Druckspeichers zwischen der Druckquelle und dem Bremsbetätigungsventil begünstigt die funktionale Sicherheit der erfindungsgemäßen Bremseinrichtung weiter. Das Rückschlagventil dient dazu, den Fluss des Mediums ausschließlich in eine Richtung - von der Druckquelle zum Bremsbetätigungsventil - zu erlauben, wodurch Rückflüsse vermieden werden. Dies trägt entscheidend zu einer stabilen und kontrollierten Druckbereitstellung bei, da verhindert werden kann, dass eine Leckage im Fluidkreislauf zwischen Bremsbetätigungsventil und Druckquelle eine ungewollte Betätigung des Bremselements auslöst. Der zwischengeschaltete Druckspeicher bietet zudem zusätzliche Kapazität zur Drucklagerung, wodurch eine sofortige Verfügbarkeit eines fluidischen Drucks bei Bedarf gewährleistet wird. Dies ist besonders vorteilhaft in Situationen, in denen eine schnelle und zuverlässige Reaktion der Bremseinrichtung erforderlich ist. Der Druckspeicher stellt sicher, dass auch bei einem temporären Ausfall der Druckquelle ausreichend Druck für eine effektive Bremsbetätigung zur Verfügung steht.

Gemäß einer vorteilhaften Weiterbildung der Erfindung ist vorgesehen, dass die fluidisch betätigbare bzw. betätigte Bremseinrichtung als eine hydraulisch betätigbare bzw. betätigte Bremseinrichtung mit einer hydraulischen Druckquelle ausgebildet ist.

Gemäß einer vorteilhaften Weiterbildung der Erfindung ist vorgesehen, dass die Bremsbetätigungsvorrichtung als Federspeicherbremszylinder und das Bremselement als Lamellenbremse ausgebildet ist.

Die erfindungsgemäße Aufgabe wird ferner durch eine landwirtschaftliche Arbeitsmaschine, insbesondere einen Traktor, mit einer solchen fluidisch betätigbaren bzw. betätigten Bremseinrichtung gelöst.

Gemäß einer vorteilhaften Weiterbildung der Erfindung ist vorgesehen, dass die landwirtschaftliche Arbeitsmaschine ein als Fahrregler ausgebildetes Steuergerät umfasst, wobei das als Fahrregler ausgebildete Steuergerät mit der Steuereinrichtung der Bremseinrichtung steuerungstechnisch verbunden ist.

Hierdurch kann eine Steuerung der Bremseinrichtung bzw. der Ventileinrichtung der Bremseinrichtung zwecks Aktuierung des Bremselements und somit der Bremse in Abhängigkeit von Betriebszuständen der Antriebsstrangkomponenten der Arbeitsmaschine erfolgen, wie beispielsweise einem Antriebsaggregat oder einem Fahrgetriebe.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäßen landwirtschaftlichen Arbeitsmaschine in Gestalt eines Traktors mit einer erfindungsgemäßen fluidisch, insbesondere hydraulisch, betätigbaren bzw. betätigten Bremseinrichtung; und
- FIG. 2:: eine schematische und exemplarische Ansicht der erfindungsgemäßen fluidisch, insbesondere hydraulisch, betätigbaren bzw. betätigten Bremseinrichtung.

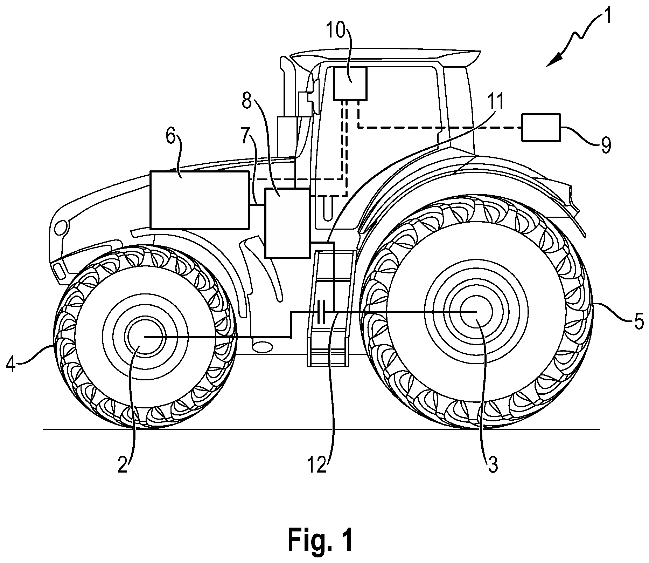

FIG. 1 zeigt eine schematische und exemplarische Darstellung einer erfindungsgemäßen landwirtschaftlichen Arbeitsmaschine 1 in Gestalt eines Traktors. Die Arbeitsmaschine 1 umfasst eine Vorderachse 2 und eine Hinterachse 3, wobei zumindest die Vorderachse 2 als lenkbare Achse ausgeführt ist. An der Vorderachse 2 ist ein erstes Paar Bodeneingriffsmittel 4 angeordnet, an der Hinterachse 3 ist ein zweites Paar Bodeneingriffsmittel 5 angeordnet, die Bodeneingriffsmittel 4, 5 können dabei wahlweise als Reifen und/oder Raupenlaufwerke ausgeführt sein. Die Arbeitsmaschine 1 umfasst weiterhin ein Antriebsaggregat 6, welches vorzugsweise als ein Verbrennungsmotor ausgeführt ist. Das Antriebsaggregat 6 ist durch eine Antriebswelle 7 mit einem Fahrgetriebe 8 verbunden. Das Fahrgetriebe 8 kann als ein eine stufenlos änderbare Abtriebsdrehzahl bereitstellendes Getriebe, ein sogenanntes hydrostatisch-mechanisch leistungsverzweigtes Getriebe, kurz CVT-Getriebe, ausgeführt sein. Die Ansteuerung des Antriebsaggregats 6 und/oder des Fahrgetriebes 8 sowie weiterer Antriebsstrangkomponenten der Arbeitsmaschine 1, wie beispielsweise der nachfolgend noch im Detail beschriebenen erfindungsgemäßen fluidisch betätigbaren bzw. betätigten Bremseinrichtung 9, kann mittels eines als Fahrregler ausgeführten Steuergeräts 10 erfolgen. Über die Antriebswelle 7 wird das von dem Antriebsaggregat 6 bereitgestellte Drehmoment auf das Fahrgetriebe 8 übertragen. Das Fahrgetriebe 8 ist durch eine Abtriebswelle 11 mit einem Antriebsstrang 12 verbunden, welcher der Übertragung eines von dem Fahrgetriebe 8 übersetzten Drehmomentes und der Drehzahl wahlweise auf die Vorderachse 2 und/oder die Hinterachse 3 dient. Bevorzugt wird zumindest die Hinterachse 3 angetrieben.

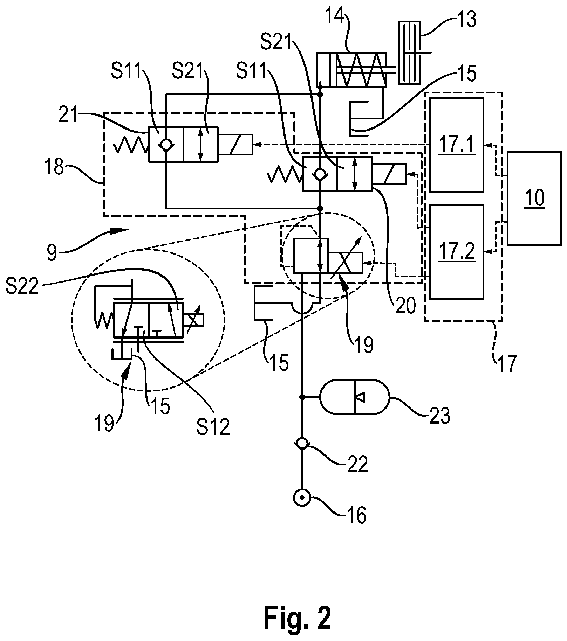

Wie angedeutet umfasst die Arbeitsmaschine 1 eine erfindungsgemäße fluidisch betätigbare bzw. betätigte Bremseinrichtung 9, welche insbesondere eine Park- bzw. Feststell- und/oder Notbremseinrichtung ausbildet. Eine mögliche Ausführungsform der erfindungsgemäßen Bremseinrichtung 9 ist in FIG. 2 dargestellt. Die erfindungsgemäße fluidisch betätigbare bzw. betätigte Bremseinrichtung 9 ist in einer bevorzugten Ausgestaltung als hydraulisch betätigbare bzw. betätigte Bremseinrichtung 9 ausgebildet. Im Folgenden wird lediglich auf die bevorzugte Ausgestaltung Bezug genommen, wobei die entsprechenden hydraulischen Komponenten gleichermaßen auch pneumatisch ausgeführt sein können. Die Bremseinrichtung 9 umfasst ein Bremselement 13 und eine mit dem Bremselement 13 gekoppelte Bremsbetätigungsvorrichtung 14. In der in FIG. 2 dargestellten Ausführungsform ist das Bremselement 13 als Lamellenbremse und die Bremsbetätigungsvorrichtung 14 als Federspeicherbremszylinder ausgebildet. Alternativ zur bevorzugten Ausgestaltung des Bremselements 13 als Lamellenbremse kann das Bremselement 13 auch als Scheibenbremse oder Trommelbremse ausgeführt sein. Die Lamellenbremse wird über den Federspeicherbremszylinder ein- oder ausgerückt, wobei ein Einrücken über die Kraft einer Druckfeder des Federspeicherbremszylinders und ein Ausrücken über einen in einem Druckraum des Federspeicherbremszylinders wirkenden hydraulischen Druck, der einen Bremskolben des Federspeicherbremszylinders hydraulisch beaufschlagt, bewirkt wird. Ein Federraum des Federspeicherbremszylinders ist über eine Entlüftung mit einer als Tank ausgebildeten Auslasseinheit 15 der Bremseinrichtung 9 verbunden. Das dem Bremsbetätigungsvorrichtung 14, insbesondere dem Druckraum des Federspeicherbremszylinders, zuzuführende Hydraulikmedium wird dabei über eine hydraulische Druckquelle 16 der Bremseinrichtung 9, welche beispielsweise von einer Arbeitshydraulik der Arbeitsmaschine 1 oder aber anderweitig bereitgestellt werden kann, zur Verfügung gestellt.

Die Bremseinrichtung 9 umfasst weiterhin eine Steuereinrichtung 17 und eine mittels der Steuereinrichtung 17 ansteuerbare Ventileinrichtung 18. Die Ventileinrichtung 18 ist der Druckquelle 16, der Auslasseinheit 15 und der Bremsbetätigungsvorrichtung 14 zwischengeschaltet. Mittels der Ventileinrichtung 18 kann bedarfsweise eine hydraulische Verbindung zwischen der Druckquelle 16 und der Bremsbetätigungsvorrichtung 14 oder der Bremsbetätigungsvorrichtung 14 und der Auslasseinheit 15 zur Betätigung des Bremselements 13 hergestellt werden, und zwar, indem die Steuereinrichtung 17 entsprechende Steuersignale zur Ansteuerung bzw. Aktuierung der Ventileinrichtung 18 generiert. Die Ventileinrichtung 18 kann in einer bevorzugten Ausführungsform steuerungstechnisch mit dem als Fahrregler ausgebildeten Steuergerät 10 der Arbeitsmaschine 1 verbunden sein, wodurch eine übergeordnete Steuerung der Ventileinrichtung 18 durch den Fahrregler in Abhängigkeit der Betriebszustände der Antriebsstrangkomponenten der Arbeitsmaschine 1, wie beispielsweise dem Antriebsaggregat 6 oder dem Fahrgetriebe 8, möglich wird. Die Ventileinrichtung 18 wird erfindungsgemäß durch mehrere Ventile gebildet. Im Einzelnen umfasst die Ventileinrichtung 18 ein mittels der Steuereinrichtung 17 ansteuerbares Bremsbetätigungsventil 19 sowie ein erstes mittels der Steuereinrichtung 17 ansteuerbares Schaltventil 20 und ein zweites mittels der Steuereinrichtung 17 ansteuerbares Schaltventil 21. Wesentlich ist dabei, dass die zwei Schaltventile 20, 21 dem Bremsbetätigungsventil 19 und der Bremsbetätigungsvorrichtung 14 zwischengeschaltet und redundant ausgeführt sind.

Die beiden Schaltventile 20, 21 sind jeweils als mittels der Steuereinrichtung 17 elektrisch betätigbare 2/2-Wegeventile ausgebildet. In einer ersten Schaltstellung S11 erlauben die Schaltventile 20, 21 den Fluss von Hydraulikmedium von dem Bremsbetätigungsventil 19 hin zur Bremsbetätigungsvorrichtung 14, geben diesen somit frei, sperren bzw. unterbinden hingegen den Fluss von Hydraulikmedium von der Bremsbetätigungsvorrichtung 14 hin zum Bremsbetätigungsventil 19. Die Sperrfunktion wird dabei vorzugsweise, wie in FIG. 2 dargestellt, über ein Rückschlagventil in der ersten Schaltstellung S11 gebildet. In einer zweiten Schaltstellung S21 ist der Fluss von Hydraulikmedium sowohl von dem Bremsbetätigungsventil 19 hin zur Bremsbetätigungsvorrichtung 14 als auch von der Bremsbetätigungsvorrichtung 14 hin zum Bremsbetätigungsventil 19 freigegeben, sodass das Hydraulikmedium in beide Flussrichtungen ungehindert fließen kann.

Das Bremsbetätigungsventil 19 ist als mittels der Steuereinrichtung 17 elektrisch betätigbares 3/2-Wegeventil ausgebildet. In einer ersten Schaltstellung S12 sperrt bzw. unterbindet das Bremsbetätigungsventil 19 den Fluss von Hydraulikmedium von der Druckquelle 16 hin zu den Schaltventilen 20, 21, erlaubt hingegen den Fluss von Hydraulikmedium von den Schaltventilen 20, 21 hin zur Auslasseinheit 15, gibt diesen somit frei. In einer zweiten Schaltstellung S22 erlaubt das Bremsbetätigungsventil 19 hingegen den Fluss von Hydraulikmedium von der Druckquelle 16 hin zu den Schaltventilen 20, 21, gibt diesen somit frei, sperrt bzw. unterbindet hingegen den Fluss von Hydraulikmedium von den Schaltventilen 20, 21 hin zur Auslasseinheit 15.

Sowohl die beiden Schaltventile 20, 21 als auch das Bremsbetätigungsventil 19 nehmen in einem ansteuerungsfreien Zustand, also einem Zustand, in dem die Steuereinrichtung 17 kein Signal zur Ansteuerung an die Ventile 19, 20, 21 übermittelt, jeweils ihre ersten Schaltstellungen S11, S12 ein und in einem angesteuerten Zustand, also einem Zustand, in dem die Steuereinrichtung 17 ein Signal zur Ansteuerung an die Ventile 19, 20, 21 übermittelt, jeweils ihre zweiten Schaltstellung S21, S22 ein. Eine solche Ausgestaltung der Ventile 19, 20, 21 der Ventileinrichtung 17 sorgt dafür, dass einerseits in einem ordnungsgemäßen Betrieb der Arbeitsmaschine 1 die Lamellenbremse über die entsprechende Versorgung des Federspeicherbremszylinders mit Hydraulikmedium kontrolliert eingelegt und gelöst werden kann, andererseits bei einem Ausfall der Steuereinrichtung 17 oder im Fall eines anderweitigen die Steuereinrichtung 17 beeinflussenden elektrischen Problems die Bremseinrichtung 9 im sicheren Zustand verbleibt, ein ungewolltes sicherheitskritisches Einlegen oder Lösen der Lamellenbremse somit ausgeschlossen werden kann. Sofern die Steuereinrichtung 17 beispielsweise aufgrund eines elektrischen Problems im Betrieb der Arbeitsmaschine 1, in dem die Lamellenbremse nicht eingelegt ist, ausfällt, bleibt die Lamellenbremse dennoch ausgerückt, da aufgrund der Einnahme der ersten Schaltstellungen S11 durch die Schaltventile 20, 21 im ansteuerungsfreien Zustand der im Druckraum des Federspeicherbremszylinders wirkenden hydraulische Druck, der den Bremskolben des Federspeicherbremszylinders hydraulisch beaufschlagt, aufrechterhalten bleibt. Der Bremsdruck bleibt somit konstant und die Lamellenremse kann nicht automatisch eingelegt werden.

In einer bevorzugten Ausführungsform ist das Bremsbetätigungsventil 19, wie in FIG. 2 dargestellt, als Proportionalventil ausgebildet ist. Die Ausgestaltung als Proportionalventil erlaubt, dass das Bremsbetätigungsventil 19 nicht nur binär zwischen seinen beiden Schaltstellungen S12, S22 geschaltet werden kann, sondern vielmehr eine kontinuierliche, fein abgestufte Regelung des Flusses an Hydraulikmedium erlaubt und somit als Druckregelventil fungiert. Anhand dieser im Bremsbetätigungsventil 19 implementierten proportionalen Druckregelfunktion kann die primär als Park- bzw. Feststellbremse fungierende Bremseinrichtung 9 bedarfsweise auch als Notbremse genutzt werden, welche über einen Handhebel oder ein anderweitig ausgestaltetes Bedienelement, beispielsweise ein Drehrad, in einer Kabine der Arbeitsmaschine 1 bei Bedarf durch einen Bediener aktuiert werden kann. Das proportionale Druckregelverhalten des Bremsbetätigungsventils 19 sorgt dabei dafür, dass mit zunehmendem Betätigungsausmaß des Handhebels bzw. des Bedienelements die durch die Lamellenbremse aufgebrachte Bremskraft proportional ansteigt, indem der im Druckraum des Federspeicherbremszylinders wirkende hydraulische Druck proportional abnimmt, die Lamellenbremse somit über die Kraft der Druckfeder des Federspeicherbremszylinders entsprechend eingerückt bzw. eingelegt wird.

In einer bevorzugten Ausführungsform der Bremseinrichtung 9 zeichnet sich die Steuereinrichtung 17 durch einen mehrteiligen Aufbau aus. Hierdurch kann die funktionale Sicherheit der Bremseinrichtung weiter verbessert werden, wodurch eine Nutzung der Bremseinrichtung 9 in hochautomatisierten oder autonomen Arbeitsmaschinen 1 möglich wird. Eine solch ausgestaltete Steuereinrichtung 17 umfasst ein erstes Steuergerät 17.1 und ein zweites Steuergerät 17.2. Das erste bzw. eine Steuergerät 17.1 der beiden Steuergeräte 17.1, 17.2 ist steuerungstechnisch ausschließlich mit dem zweiten bzw. einem Schaltventil 21 der beiden Schaltventile 20, 21 verbunden und dazu vorgesehen und eingerichtet, ausschließlich das zweite bzw. eine Schaltventil 21 bedarfsweise anzusteuern. Das zweite bzw. andere Steuergerät 17.2 der beiden Steuergeräte 17.1, 17.2 ist steuerungstechnisch sowohl mit dem Bremsbetätigungsventil 19 als auch mit dem ersten bzw. anderen Schaltventil 20 der beiden Schaltventile 20, 21 verbunden und dazu vorgesehen und eingerichtet, sowohl das Bremsbetätigungsventil 19 als auch das erste bzw. andere Schaltventil 20 bedarfsweise anzusteuern.

Die Bremseinrichtung 9 umfasst weiterhin ein Rückschlagventil 22. Dieses Rückschlagventil 22 ist im Hydraulikreislauf der Druckquelle 16 und dem Bremsbetätigungsventil 19 zwischengeschaltet und dazu vorgesehen und eingerichtet, den Fluss von Hydraulikmedium von der Druckquelle 16 hin zum Bremsbetätigungsventil 19 zu erlauben, also freizugeben, und von dem Bremsbetätigungsventil 19 hin zur Druckquelle 16 zu sperren bzw. zu unterbinden. Neben der Druckquelle 16 kann die Bremseinrichtung 9 weiterhin einen Druckspeicher 23 umfassen. Sofern ein solcher Druckspeicher 23 vorgesehen ist, ist dieser dem Bremsbetätigungsventil 19 und der Druckquelle 16 im Hydraulikkreislauf zwischengeschaltet. Das Rückschlagventil 22 ist dann derart angeordnet, dass es der Druckquelle 16 und dem Druckspeicher 23 zwischengeschaltet ist. Die Implementierung des Druckspeichers 23 in den Hydraulikkreislauf der Bremseinrichtung 9 ist insbesondere dahingehend als vorteilhaft anzusehen, dass, sofern die Druckquelle 16 ausfällt oder eine Leckage im Bereich der Druckquelle 16 auftritt, über den Druckspeicher 23 dennoch ein ausreichender Druck im Druckraum des Federspeicherbremszylinders aufgebaut werden kann, sodass die eingelegte Lamellenbremse und somit die Feststell- bzw. Parkbremse gelöst werden kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Arbeitsmaschine | S11 | Schaltstellung |
| 2 | Vorderachse | S21 | Schaltstellung |
| 3 | Hinterachse | S12 | Schaltstellung |
| 4 | Bodeneingriffsmittel | S22 | Schaltstellung |
| 5 | Bodeneingriffsmittel | | |
| 6 | Antriebsaggregat | | |
| 7 | Antriebswelle | | |
| 8 | Fahrgetriebe | | |
| 9 | Bremseinrichtung | | |
| 10 | Steuergerät/Fahrregler | | |
| 11 | Abtriebswelle | | |
| 12 | Antriebsstrang | | |
| 13 | Bremselement | | |
| 14 | Bremsbetätigungsvorrichtung | | |
| 15 | Auslasseinheit | | |
| 16 | Druckquelle | | |
| 17 | Steuereinrichtung | | |
| 17.1 | Steuergerät | | |
| 17.2 | Steuergerät | | |
| 18 | Ventileinrichtung | | |
| 19 | Bremsbetätigungsventil | | |
| 20 | Schaltventil | | |
| 21 | Schaltventil | | |
| 22 | Rückschlagventil | | |
| 23 | Druckspeicher | | |

## Patentansprüche

1. Fluidisch betätigbare Bremseinrichtung (9) für eine landwirtschaftliche Arbeitsmaschine (1), insbesondere einen Traktor, wobei die Bremseinrichtung (9) ein Bremselement (13), eine mit dem Bremselement (13) gekoppelte Bremsbetätigungsvorrichtung (14), eine fluidische Druckquelle (16) sowie eine als Tank ausgebildete Auslasseinheit (15) umfasst, wobei die Bremseinrichtung (9) eine Steuereinrichtung (17) und eine mittels der Steuereinrichtung (17) ansteuerbare Ventileinrichtung (18) umfasst, welche der Druckquelle (16), der Auslasseinheit (15) und der Bremsbetätigungsvorrichtung (14) zwischengeschaltet und dazu vorgesehen und eingerichtet ist, bedarfsweise eine fluidische Verbindung zwischen der Druckquelle (16) und der Bremsbetätigungsvorrichtung (14) oder der Bremsbetätigungsvorrichtung (14) und der Auslasseinheit (15) zur Betätigung des Bremselements (13) herzustellen,
**dadurch gekennzeichnet, dass**
die Ventileinrichtung (18) ein ansteuerbares Bremsbetätigungsventil (19) sowie ein erstes ansteuerbares Schaltventil (20) und ein zweites ansteuerbares Schaltventil (21) umfasst, wobei die zwei Schaltventile (20, 21) dem Bremsbetätigungsventil (19) und der Bremsbetätigungsvorrichtung (14) zwischengeschaltet und redundant ausgeführt sind.

2. Bremseinrichtung (9) nach Anspruch 1, **dadurch gekennzeichnet, dass** die Steuereinrichtung (17) ein erstes Steuergerät (17.1) und ein zweites Steuergerät (17.2) umfasst, wobei ein Steuergerät (17.1) der beiden Steuergeräte (17.1, 17.2) steuerungstechnisch ausschließlich mit einem Schaltventil (21) der beiden Schaltventile (20, 21) verbunden und dazu vorgesehen und eingerichtet ist, ausschließlich das eine Schaltventil (21) bedarfsweise anzusteuern, wobei das andere Steuergerät (17.2) der beiden Steuergeräte (17.1, 17.2) steuerungstechnisch sowohl mit dem Bremsbetätigungsventil (19) als auch mit dem anderen Schaltventil (20) der beiden Schaltventile (20, 21) verbunden und dazu vorgesehen und eingerichtet ist, sowohl das Bremsbetätigungsventil (19) als auch das andere Schaltventil (20) bedarfsweise anzusteuern.

3. Bremseinrichtung (9) nach Anspruch 1 oder 2, **dadurch gekennzeichnet, dass** die Schaltventile (20, 21) als elektrisch betätigbare 2/2-Wegeventile ausgebildet sind, wobei in einer ersten Schaltstellung (S11) ein Fluss eines Mediums von dem Bremsbetätigungsventil (19) hin zur Bremsbetätigungsvorrichtung (14) freigeben und von der Bremsbetätigungsvorrichtung (14) hin zum Bremsbetätigungsventil (19) gesperrt ist, wobei insbesondere die erste Schaltstellung (S11) durch ein Rückschlagventil gebildet ist, wobei in einer zweiten Schaltstellung (S21) ein Fluss eines Mediums sowohl von dem Bremsbetätigungsventil (19) hin zur Bremsbetätigungsvorrichtung (14) als auch von der Bremsbetätigungsvorrichtung (14) hin zum Bremsbetätigungsventil (19) freigegeben ist.

4. Bremseinrichtung (9) nach Anspruch 3, **dadurch gekennzeichnet, dass** die Schaltventile (20, 21) dazu vorgesehen und eingerichtet sind, in einem ansteuerungsfreien Zustand die erste Schaltstellung (S11) und in einem angesteuerten Zustand die zweite Schaltstellung (S21) einzunehmen.

5. Bremseinrichtung (9) nach einem der Ansprüche 1 bis 4, **dadurch gekennzeichnet, dass** das Bremsbetätigungsventil (19) als elektrisch betätigbares 3/2-Wegeventil ausgebildet ist, wobei in einer ersten Schaltstellung (S12) ein Fluss eines Mediums von der Druckquelle (16) hin zu den Schaltventilen (20, 21) gesperrt und von den Schaltventilen (20, 21) hin zur Auslasseinheit (15) freigegeben ist, wobei in einer zweiten Schaltstellung (S22) ein Fluss eines Mediums von der Druckquelle (16) hin zu den Schaltventilen (20 , 21) freigegeben und von den Schaltventilen (20, 21) hin zur Auslasseinheit (15) gesperrt ist.

6. Bremseinrichtung (9) nach Anspruch 5, **dadurch gekennzeichnet, dass** das Bremsbetätigungsventil (19) dazu vorgesehen und eingerichtet ist, in einem ansteuerungsfreien Zustand die erste Schaltstellung (S12) und in einem angesteuerten Zustand die zweite Schaltstellung (S22) einzunehmen.

7. Bremseinrichtung (9) nach einem der Ansprüche 1 bis 6, **dadurch gekennzeichnet, dass** das Bremsbetätigungsventil (19) als Proportionalventil ausgebildet ist.

8. Bremseinrichtung (9) nach einem der Ansprüche 1 bis 7, **dadurch gekennzeichnet, dass** der Druckquelle (16) und dem Bremsbetätigungsventil (19) ein Rückschlagventil (22) zwischengeschaltet ist, welches dazu vorgesehen und eingerichtet ist, einen Fluss eines Mediums von der Druckquelle (16) hin zum Bremsbetätigungsventil (19) freizugeben und von dem Bremsbetätigungsventil (19) hin zur Druckquelle (16) zu sperren.

9. Bremseinrichtung (9) nach einem der Ansprüche 1 bis 8, **dadurch gekennzeichnet, dass** der Druckquelle (16) und dem Bremsbetätigungsventil (19) ein Druckspeicher (23) zwischengeschaltet ist.

10. Bremseinrichtung (9) nach Anspruch 9 in Kombination mit Anspruch 8, **dadurch gekennzeichnet, dass** das Rückschlagventil (22) derart angeordnet ist, dass es der Druckquelle (16) und dem Druckspeicher (23) zwischengeschaltet ist.

11. Bremseinrichtung (9) nach einem der Ansprüche 1 bis 10, **dadurch gekennzeichnet, dass** die Bremseinrichtung (9) als eine hydraulisch betätigbare bzw. betätigte Bremseinrichtung (9) mit einer hydraulischen Druckquelle (16) ausgebildet ist.

12. Bremseinrichtung (9) nach einem der Ansprüche 1 bis 11, **dadurch gekennzeichnet, dass** die Bremsbetätigungsvorrichtung (14) als Federspeicherbremszylinder und das Bremselement (13) als Lamellenbremse ausgebildet ist.

13. Landwirtschaftliche Arbeitsmaschine (1), insbesondere Traktor, mit einer fluidisch betätigbaren Bremseinrichtung (9), **dadurch gekennzeichnet, dass** die Bremseinrichtung (9) nach einem der Ansprüche 1 bis 12 ausgebildet ist.

14. Landwirtschaftliche Arbeitsmaschine (1) nach Anspruch 13, **dadurch gekennzeichnet, dass** die landwirtschaftliche Arbeitsmaschine (1) ein als Fahrregler ausgebildetes Steuergerät (10) umfasst, wobei das als Fahrregler ausgebildete Steuergerät (10) mit der Steuereinrichtung (17) der Bremseinrichtung (9) steuerungstechnisch verbunden ist.
